(19) Europäisches Patentamt
European Patent Office
Office européen des brevets

(11) **EP 4 189 295 B1**

(12) **EUROPÄISCHE PATENTSCHRIFT**

(45) Veröffentlichungstag und Bekanntmachung des Hinweises auf die Patenterteilung:
**28.08.2024   Patentblatt 2024/35**

(21) Anmeldenummer: **21743458.8**

(22) Anmeldetag: **12.07.2021**

(51) Internationale Patentklassifikation (IPC):
*F24D 19/10* *(2006.01)*     *F04D 15/00* *(2006.01)*

(52) Gemeinsame Patentklassifikation (CPC):
**F04D 15/0066; F04D 15/0088;** F05D 2270/301;
F05D 2270/701; F24D 19/1012; Y02B 30/70

(86) Internationale Anmeldenummer:
**PCT/EP2021/069311**

(87) Internationale Veröffentlichungsnummer:
**WO 2022/023006 (03.02.2022 Gazette 2022/05)**

(54) **VERFAHREN ZUR REGELUNG EINER UMWÄLZPUMPE, INSBESONDERE HEIZUNGSPUMPE**

METHOD TO CONTROL A CIRCULATION PUMP, IN PARTICULAR A HEATING PUMP

PROCÉDÉ DE CONTRÔLE D'UNE POMPE DE CIRCULATION, EN PARTICULIER D'UNE POMPE DE CHAUFFAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2020   DE 102020120022**

(43) Veröffentlichungstag der Anmeldung:
**07.06.2023   Patentblatt 2023/23**

(73) Patentinhaber: **KSB SE & Co. KGaA**
**67227 Frankenthal (DE)**

(72) Erfinder:
• **ECKL, Martin**
  **67227 Frankenthal (DE)**
• **MÜLLER, Benedikt**
  **67227 Frankenthal (DE)**

(56) Entgegenhaltungen:
**DE-A1- 10 163 987     DE-A1- 102017 203 474**

**Beschreibung**

Die Erfindung betrifft ein Verfahren zur Regelung einer Umwälzpumpe mit variabler Drehzahl in einer hydraulischen Anlage, insbesondere in einer Heizungsanlage.

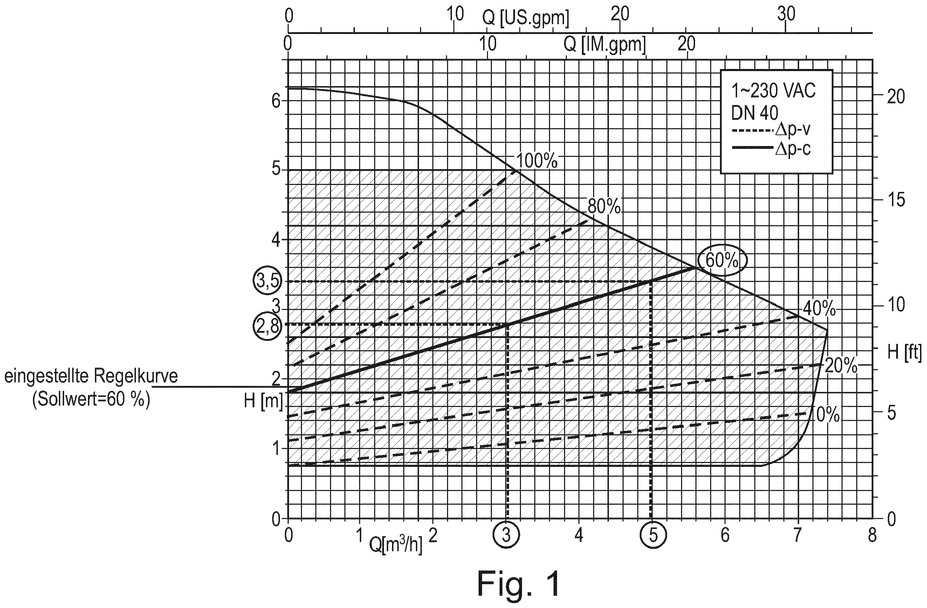

Drehzahlgeregelte Heizungsumwälzpumpen werden heute meist mit der Regelart "Proportionaldruck" betrieben. Dabei erfasst die Pumpe automatisch den aktuell vorliegenden Förderstrom und stellt die Förderhöhe entsprechend einer Regelkurve ein. Die Regelkurve sieht eine Förderhöhe vor, die proportional zum Förderstrom steigt. Je nach Gebäude können unterschiedliche Regelkurven eingestellt werden. Die Auswahl der Regelkurve erfolgt anhand eines zugeordneten Sollwertes, der zwischen 0% und 100% liegt. Figur 1 zeigt in einem Q/H-Diagramm beispielhaft die einstellbaren Regelkurven mit zugeordneten Sollwerten von 0%, 20%, 40%, 60%, 80% und 100%.

Wird an der Pumpenregelung ein Sollwert von 60% eingestellt, so wird die im Bild markierte Regelkurve verwendet. Beträgt der Förderstrom Q=5 m³/h, so stellt die Pumpenregelung durch Drehzahlanpassung eine Förderhöhe H von 3,5 m ein. Bei einem Förderstrom Q von 3 m³/h wird hingegen eine Förderhöhe H von 2,8 m eingestellt.

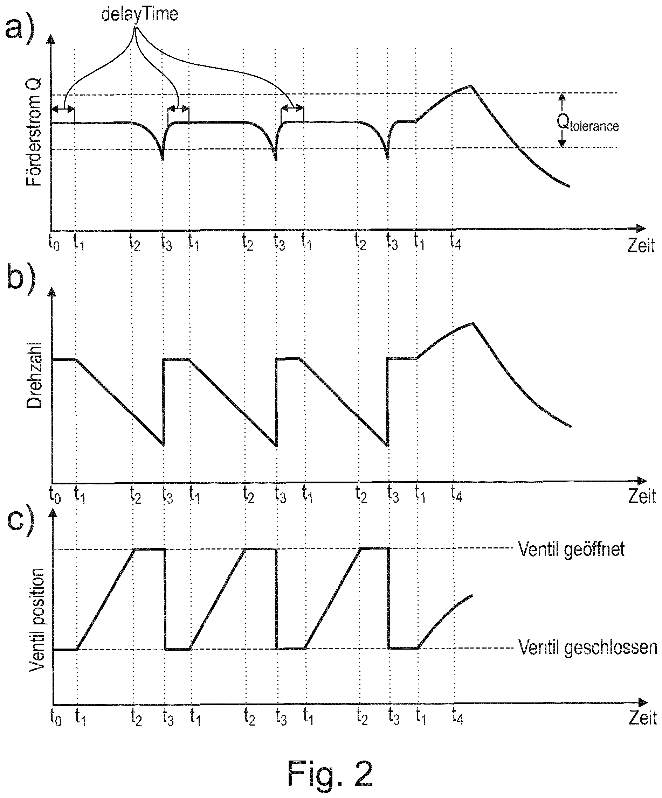

Eine Weiterentwicklung der Proportionaldruckregelung zur Energieeinsparung ist das sogenannte "Dynamic Control"-Verfahren der Anmelderin. Hier wird nach dem Einschalten der Pumpe ($t_0$) zunächst eine klassische Regelkurve, insbesondere Proportionaldrucckurve eingesetzt (Figur 2a). Gleichzeitig beobachtet die Pumpe ihren Förderstrom Q und prüft, ob dieser innerhalb von konstanten Grenzen verbleibt (konstant bedeutet, der Förderstrom bewegt sich innerhalb der Grenzen Qtoierance wie in Figur 2a dargestellt). Wenn der Förderstrom für eine bestimmte Dauer (Figur 2a "delayTime") konstant geblieben ist, wird der Betriebspunkt als "stabil" bezeichnet (hier Zeitpunkt $t_1$).

Die Pumpe beginnt dann sehr langsam aber permanent ihre Drehzahl abzusenken (Figur 2b). Als Folge dessen öffnen die Thermostatventile der Heizungsanlage (siehe Figur 2c), um die Raumtemperatur trotz sinkender Drehzahl der Umwälzpumpe konstant zu halten. Sobald die Thermostatventile vollständig geöffnet sind (Zeitpunkt $t_2$), wird die Durchflussmenge abnehmen und die Grenzen Qtoierance werden gerissen (Zeitpunkt t3).

Beim Überschreiten der Grenzen schaltet der Algorithmus zurück auf die statische Regelkurve und die Drehzahl erhöht sich auf ihren ursprünglichen Wert, d.h. es wird die Regelkurve mit dem ursprünglichen Sollwert angewendet. Auf diese Weise ist sichergestellt, dass im Raum keine Unterversorgung auftreten kann.

Nachteilig an dem aufgezeigten Verfahren ist jedoch, dass die Regelung immer auf die ursprünglich eingestellte Regelkurve zurückspringt. Die Erfinder haben diese Tatsache als Anknüpfungspunkt für weitere Verbesserungen des Verfahrens zur Optimierung der Energieeffizienz der Pumpe ausgemacht.

Das Dokument DE 101 63 987 A1 offenbart ein weiteres Verfahren zur Regelung einer Umwälzumpe.

Die Aufgabe der vorliegenden Erfindung besteht also darin, ausgehend vom Stand der Technik ein optimiertes Regelverfahren für eine Umwälzpumpe, insbesondere eine Heizungsumwälzpumpe aufzuzeigen, das einen effizienteren Betrieb der Umwälzpumpe zulässt.

Gelöst wird diese Aufgabe durch ein Verfahren gemäß den Merkmalen des Anspruch 1. Vorteilhafte Ausführungen sind Gegenstand der abhängigen Ansprüche.

Die Erfindung geht von einem Verfahren zur Regelung einer Umwälzpumpe mit variabler Drehzahl in einer hydraulischen Anlage aus. Die hydraulische Anlage kann eine Heizungsanlage sein, deren Anlagenkennlinie aufgrund selbstregulierender Heizkörperthermostate dynamisch ist. Wie im Stand der Technik wird die Pumpe bzw. deren Drehzahl gemäß einer vorbestimmten Regelkurve eingestellt. Eine solche Regelkurve ist bspw. in einem Q-H-Diagramm definiert und gibt der Pumpenregelung für einen gegebenen Förderstrom eine einzustellende Förderhöhe vor. Die Regelung der Pumpe variiert dann Ihre Drehzahl um die vorgegebene Förderhöhe zu erreichen. Die Regelkurven können bspw. die Förderhöhe proportional zum Förderstrom definieren, so dass die Pumpenregelung eine Proportionaldruckregelung der Pumpe ausführt. Das Verfahren ist jedoch genauso gut auch für andere Regeltypen und Regelkurven anwendbar.

Erfindungsgemäß sieht das Verfahren vor, dass während der auf Basis einer vorgegebenen Regelkurve ausgeführten Pumpenregelung geprüft wird, ob sich die Pumpe bzw. das hydraulische System in einem stationären Betriebspunkt befindet. Ein stationärer Betriebspunkt liegt bspw. vor, wenn sich die Anlagenkennlinie nicht ändert, bspw. bleibt der Öffnungsgrad der Thermostatventile einer Heizungsanlage nahezu konstant. In diesem Zustand ermittelt die Pumpe den initialen Anlagenwiderstand, insbesondere unter Verwendung des physikalischen Zusammenhangs

$$\zeta = \frac{H}{Q^2},$$

wobei H für die Förderhöhe und Q für den Förderstrom steht. Wird der vorgenannte stationäre Betriebspunkt erkannt, wird ein Optimierungsprozess zur Optimierung der eingestellten und angewendeten Regelkurve ausgelöst. Während des Optimierungsprozesses beginnt die Pumpe mit dem Absenken der Pumpendrehzahl, wie dies bereits durch die vorbekannte Funktion "Dynamic Control" (siehe Figuren 2a-2d) ausgeführt wird. Dabei wird die Drehzahl langsam, jedoch idealerweise permanent reduziert. Durch das Absenken der Drehzahl werden in der hydraulischen Anlage verbaute Ventile, insbesondere Thermostatventile, gezwungen weitestgehend zu öffnen, wodurch sich der Anlagenwiderstand reduziert. Gemäß der Erfindung wird die Drehzahl dabei solange abgesenkt bis sich in der Anlage der geringste Anlagenwiderstand einstellt, d.h. idealerweise alle Thermostatventile vollständig geöffnet sind.

Ist der Zustand des minimalen Anlagenwiderstands erreicht, wird dieser durch die Pumpe erkannt und die Pumpe berechnet den dann vorliegenden minimalen Anlagenwiderstand, insbesondere gemäß der vorstehenden Gleichung. Für die Optimierung der Regelkurve wird angenommen, dass der energetisch günstige Betriebszustand der Pumpe dann vorliegt, wenn die hydraulische Anlage den kleinstmöglichen Anlagenwiderstand aufweist. Durch Vergleich des initialen Anlagenwiderstandes mit dem erfassten minimalen Anlagenwiderstand kann nun bestimmt werden, ob und wie weit die beiden Widerstandswerte voneinander abweichen. Auf Grundlage des Vergleichsergebnisses kann nun eine Anpassung der Regelkurve erfolgen, um den sich im normalen Regelbetrieb einstellenden initialen Anlagenwiderstand näher an den minimalen Anlagenwiderstand heranzuführen.

Wie vorstehend beschrieben soll ein Optimierungsprozess dann ausgelöst werden, wenn ein stationärer Betriebspunkt erkannt wird. Vorteilhafterweise geht die Pumpe von einem stationären Betriebspunkt dann aus, wenn der gemessene, aktuelle Förderstrom eine definierte Grenzabweichung für den Förderstrom nicht überschreitet, d.h. der Förderstrom über einen gewissen Zeitraum konstant bzw. nahezu konstant bleibt. Beispielsweise muss der gemessene oder mittels Algorithmus von der Pumpe geschätzte Förderstrom für eine definierte Zeitdauer t innerhalb eines definierten Bereichs $\Delta Q$ des Förderstromes liegen. Der Bereich $\Delta Q$ definiert die zulässige Abweichung des Förderstroms nach oben und unten, bei dieser immer noch von einem quasi stationären Förderstrom auszugehen ist.

Erfindungsgemäß wird die Pumpendrehzahl solange abgesenkt, bis sich in der Anlage der minimale Anlagenwiderstand einstellt. Gemäß bevorzugter Ausführung der Erfindung geht die Pumpe davon aus, dass der Zustand des minimalen Anlagenwiderstandes noch nicht erreicht sein kann, wenn der Förderstrom trotz Drehzahlabsenkung innerhalb der definierten Grenzabweichung bleibt, d.h. innerhalb des Bereichs $\Delta Q$ liegt. Begründet ist dies dadurch, dass die Drehzahlabsenkung während des Optimierungsprozesses anfänglich noch durch das Öffnen der Ventile in der Anlage kompensiert wird, so dass trotz Drehzahlabsenkung der Förderstrom nahezu konstant gehalten werden kann. Sind die Ventile hingegen bereits vollständig geöffnet, so führt eine weitere Reduzierung der Pumpendrehzahl zu einer zwingenden Abnahme des Förderstroms, was von der Pumpe erkannt wird. D.h. wird die Grenzabweichung nach weiterer Drehzahlabsenkung überschritten und der Förderstrom liegt nicht mehr innerhalb des Bereichs $\Delta Q$, nimmt die Pumpe an, dass nun der minimale Anlagenwiderstand erreicht sein könnte.

Beim Vergleich des Anlagenwiderstandes zur Anpassung der Regelkurve kann vorzugsweise das Widerstandsverhältnis zwischen initialem und minimalem Anlagenwiderstand betrachtet werden. Die Entscheidung ob und in welcher Form eine Anpassung der Regelkurve erfolgen soll wird somit abhängig vom Verhältniswert und somit dem Grad der Abweichung zwischen beiden Widerstandswerten getroffen. Ist das Verhältnis zwischen minimalem zu initialem Widerstandswert groß und liegt insbesondere über einem vordefinierten ersten Grenzwert, so soll die Regelkurve abgesenkt werden. Das Absenken der Regelkurve hat zur Konsequenz, dass die Pumpe bei vorgegebenem Förderstrom eine geringere Förderhöhe einstellt. Im Gegensatz dazu kann die Regelkurve angehoben werden, wenn das Verhältnis größer als der erste Grenzwert ist. Bevorzugt kann für die Entscheidung zur Anhebung der Regelkurve auch ein separater (zweiter) Grenzwert definiert sein. Der zwischen dem ersten und dem zweiten Grenzwert liegende Korridor definiert einen Wertebereich, für den, sofern das Widerstandsverhältnis zwischen minimalem und initialem Anlagenwiderstand innerhalb dieses Korridors liegt, keine Anpassung der Regelkurve ausgeführt wird.

Denkbare Werte für den ersten Grenzwert liegen zwischen 0,85 bis 0,95. Bevorzugt ist ein Wert für den ersten Grenzwert von etwa 0,9. Der zweite Grenzwert kann zwischen 0,95 und 1 liegen, besonders bevorzugt ist ein Wert von etwa 0,98.

Der Umfang der Anpassung der Regelkurve, d.h. wie weit eine Absenkung oder Anhebung erfolgen soll, kann abhängig vom berechneten Differenzbetrag zwischen initialem und minimalem Anlagenwiderstand festgelegt werden, d.h. die Höhe des Differenzbetrages ist ausschlaggebend für den Grad der Absenkung der Regelkurve. Gegebenenfalls kann der Differenzbetrag noch mit einem konfigurierbaren Faktor angepasst, d.h. erhöht oder reduziert werden.

Die Absenkung der Regelkurve kann gemäß nachstehend beschriebenem Schema erfolgen. Die Pumpe ermittelt zunächst den Anlagenwiderstand für den höchsten, mittels der aktuell eingestellten Regelkurve erreichbaren Betriebspunkt. Definiert ist dieser bevorzugt durch den Schnittpunkt der Regelkurve mit der Q-H-Pumpenkennlinie. Der so erhaltene Anlagenwiderstand wird dann durch den berechneten Differenzwert reduziert, vorzugsweise unter Berücksichtigung des vorgenannten Faktors. Auf Grundlage des reduzierten Anlagenwiderstandes wird dann die passende Regelkurve bestimmt, die dann die Pumpenkennlinie bei geringerer Förderhöhe schneidet.

Wird hingegen zuvor festgestellt, dass aufgrund des Widerstandsverhältnisses ein Anheben der Regelkurve notwendig ist, kann analog zur vorstehend beschriebenen Vorgehensweise vorgegangen werden oder alternativ der Anlagenwiderstand im höchsten, mittels der aktuell eingestellten Regelkurve erreichbaren Betriebspunkt stattdessen um einen festen, insbesondere vordefinierbaren Betrag erhöht werden. Auf Grundlage des erhöhten Anlagenwiderstandwertes kann dann die passende Regelkurve ausgewählt werden.

Gemäß bevorzugter Ausführung wird der vorbeschriebene Optimierungsprozess iterativ ausgeführt.

Neben dem erfindungsgemäßen Verfahren betrifft die Erfindung ebenso eine Umwälzpumpe, insbesondere Heizungsumwälzpumpe, mit einer Regelungseinheit, die konfiguriert ist, das erfindungsgemäße Verfahren bzw. eine vorteilhafte Ausführungsvariante des Verfahrens auszuführen.

Weitere Vorteile und Eigenschaften der Erfindung sollen nachfolgend anhand eines konkreten Ausführungsbeispiels der Erfindung aufgezeigt werden. Die nachfolgenden Figuren dienen zur Verdeutlichung des erfindungsgemäßen Verfahrens. Es zeigen:

Figur 1: ein Q-H-Diagramm mit eingezeichneter Regelkurve für eine Proportionaldruckregelung,

Figur 2: diverse Diagrammdarstellungen zur Veranschaulichung der "Dynamic Control-Schritte" der Anmelderin,

Figur 3: der Ablauf der "Dynamic Control -Schritte" im Q-H-Diagramm,

Figur 4: der Ablauf des erfindungsgemäßen Verfahrens im Q-H-Diagramm,

Figur 5: weitere Diagrammdarstellungen zur Erläuterung des erfindungsgemäßen Verfahrens,

Figur 6: ein Q-H-Diagramm mit eingezeichneter aktiver Regelkurve und aktuellem Anlagenwiderstand,

Figur 7: das Q-H-Diagramm mit abgesenkter Regelkurve

Figur 8: das Q-H-Diagramm mit angehobener Regelkurve,

Figur 9: Diagrammdarstellung eines Simulationsergebnisses des erfindungsgemäßen Verfahrens und

Figur 10: Diagrammdarstellung eines weiteren Simulationsergebnisses des erfindungsgemäßen Verfahrens.

Die aus dem Stand der Technik bekannte Funktion *"Dynamic Control"*, d.h. das Erfassen eines stationären Betriebspunktes und das anschließende Absenken der Drehzahl wurde bisher ausschließlich verwendet, um während des Absenkzyklus Energie zu sparen. Darüber hinaus liefert sie aber auch Informationen über die Anlagenkennlinie. Diese Informationen wurden bislang nicht verwendet. Genau hier setzt die Funktion des erfindungsgemäßen Verfahrens an, nachfolgend auch als *"Advanced Dynamic Control"* bezeichnet, mit dieser ein Optimierungsprozess zur Anpassung der durch die Pumpenregelung der Pumpe eingesetzten aktiven Regelkurve eingeführt wird. Die Grundidee des erfindungsgemäßen Verfahrens ist es, die Informationen über die Anlagenkennlinie, die während eines Absenkzyklus ermittelt werden, zu verwenden, um den eingestellten Sollwert, der die aktive Regelkurve festlegt, stetig zu optimieren.

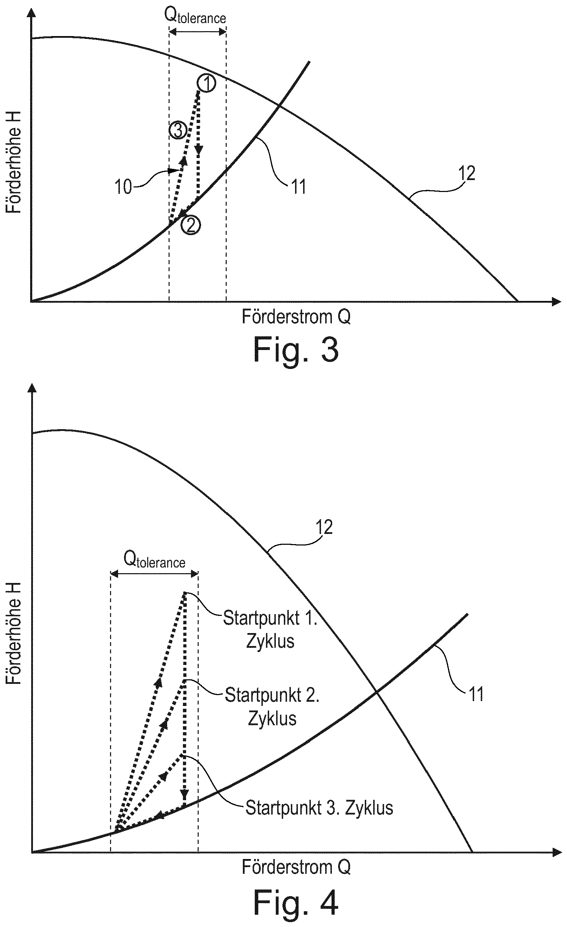

Zur Erläuterung wird Figur 3 betrachtet. Die Figur zeigt ein Q-H-Diagramm. Bezugszeichen 12 kennzeichnet die Pumpenkennlinie, Bezugszeichen 11 die Kennlinie des minimalen hydraulischen Anlagenwiderstandes. Die durchgezogene Linien 10 zeigt das Verhalten der Funktion *"Dynamic Control"*. Es ist der gleiche Ablauf, wie in Figur 2 dargestellt, allerdings nicht als zeitliche Abfolge, sondern im Förderstrom-Förderhöhen Diagramm. Der Algorithmus startet in Punkt 1. Solange der Durchfluss innerhalb der Grenzen $Q_{tole\text{-}rance}$ bleibt, werden die Drehzahl und dadurch auch die Förderhöhe H reduziert. Da gleichzeitig die Thermostatventile des Heizkreislaufes öffnen, bleibt der Förderstrom Q konstant, bis die Thermostatventile vollständig geöffnet sind.

Ein weiteres Absinken der Drehzahl und dadurch der Förderhöhe kann jetzt nicht mehr durch die Thermostatventile ausgeglichen werden, sodass der Förderstrom Q ebenfalls absinkt (Punkt 2). Sobald die Grenzen $Q_{tolerance}$ gerissen werden, schaltet der Algorithmus zurück zur statischen Regelkurve 3 und das Verfahren beginnt von vorn.

Wie in Figur 3 zu sehen ist, werden die Grenzen Qtoierance genau dann gerissen, wenn die Thermostatventile vollständig geöffnet sind, das heißt, wenn sich der Betriebspunkt auf der minimalen Anlagenkennlinie 11 befindet. Wenn die Pumpe in diesem Zustand die Berechnung:

$$\zeta = \frac{H}{Q^2}$$

durchführt, bekommt sie den minimalen hydraulischen Widerstandsbeiwert $\zeta$, mit dem sich die minimale Anlagenkennlinie 11 vollständig beschreiben lässt.

Die Idee der Erfindung *"Advanced Dynamic Control"* ist es, mit jedem Absenkzyklus etwas dichter an die minimale Anlagenkennlinie 11 heranzukommen, ohne sie zu erreichen. Veranschaulicht ist dies in Figur 4, die das Verhalten der erfindungsgemäßen Funktion "Advanced Dynamic Control" im Förderstrom-Förderhöhen Diagramm darstellt. Der Algorithmus startet im Startpunkt des ersten Zyklus mit der höchsten Förderhöhe. Solange der Durchfluss innerhalb der Grenzen Qtoierance bleibt, werden die Drehzahl und dadurch auch die Förderhöhe H reduziert. Da gleichzeitig die Thermostatventile des Heizkreislaufes öffnen, bleibt der Förderstrom Q zunächst konstant, bis die Thermostatventile vollständig geöffnet sind. Nach Erreichen der minimalen Anlagenkennlinie 11 nimmt dann bei weiterer Drehzahlabsenkung auch der Förderstrom Q ab, wodurch die Pumpe das Erreichen der minimalen Anlagenkennlinie 11 erkennt.

Die Erfindung optimiert dann, wie nachfolgend noch im Detail erläutert wird, iterativ den Sollwert, der die aktive Regelkurve der Pumpe definiert. Siehe hierzu Figur 1, die mehrere Proportionaldruckregelkurven zeigt. Jede dieser Regelkurven wird über ihren Sollwert eindeutig bezeichnet. Durch Anpassung des Sollwertes beginnt die Pumpe im nächsten Iterationsschritt des Verfahrens somit mit reduzierter Förderhöhe als neuem Startpunkt.

Der Default-Sollwert wird vom Nutzer eingestellt. Das Verfahren lässt sich in drei Schritte unterteilen, die dann iterativ ausgeführt werden können.

Schritt 1: Finde Anlagenwiderstände mittels *"Dynamic Control"*

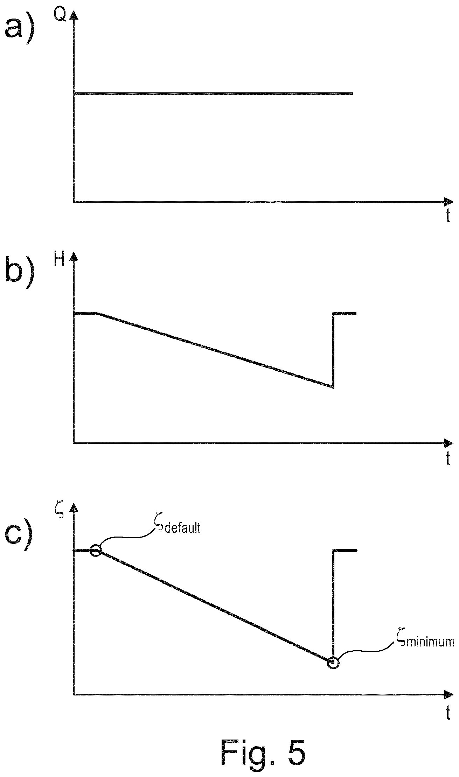

Zunächst läuft die Pumpe mit dem gewählten Default-Sollwert und dem klassischen *"Dynamic Control"*. Die Pumpe speichert jedoch den Anlagenwiderstand $\zeta_{default}$ zu Beginn des Absenkungszyklus. Gleichzeitig wird aufgezeichnet, welcher minimale Anlagenwiderstand $\zeta_{minimum}$ während des Absenkungszyklus aufgetreten ist. Vergleiche dazu Figur 5, insbesondere Figur 5c.

Wenn $\zeta_{minimum}$ und $\zeta_{default}$ ungefähr gleich groß sind, dann hat sich der Anlagenwiderstand durch die Absenkung nicht verändert. Wenn $\zeta_{minimum}$ kleiner als $\zeta_{default}$ ist, dann haben die Thermostatventile während des Absenkens der Drehzahl geöffnet.

Schritt 2: Finde neuen Sollwert

Die Pumpe bewertet, wie sich der Anlagenwiderstand während des letzten Absenkzyklus verändert hat. Falls das Verhältnis von $\zeta_{minimum}$ und $\zeta_{default}$ klein ist, haben sich die Thermostatventile während des Absenkzyklus deutlich geöffnet. Dies ist ein Hinweis, dass der default-Sollwert der Pumpe zu hoch eingestellt ist. In diesem Fall wird der Sollwert von der Steuerung reduziert.

Ist das Verhältnis von $\zeta_{minimum}$ und $\zeta_{default}$ hingegen groß, dann haben sich die Ventile kaum geöffnet, trotz Absenkens der Förderhöhe. Dies ist ein Hinweis, dass der default-Sollwert für diese Anwendung recht niedrig eingestellt ist. In diesem Fall wird der Sollwert von der Steuerung erhöht.

Die Schwellwerte, ab wann das Verhältnis von $\zeta_{minimum}$ und $\zeta_{default}$ als klein bzw. groß bewertet wird, können eingestellt werden. Hierfür werden folgende Parameter definiert:

| Parameter | Beispiel-Wert | Bedeutung |
|---|---|---|
| thresholdForReduceSetpoint | 0,9 | Falls das Verhältnis von $\zeta_{minimum}$ und $\zeta_{default}$ kleiner als der Parameter thresholdForReduceSetpoint ist, soll der gewählte Sollwert reduziert werden. |
| thresholdForIncrease-Setpoint | 0,98 | Falls das Verhältnis von $\zeta_{minimum}$ und $\zeta_{default}$ größer als der Parameter thresholdForIncreaseSetpoint ist, soll der gewählte Sollwert erhöht werden. |

Tritt der Fall ein, dass der Sollwert reduziert werden soll ($\zeta_{minimum}/\zeta_{default}<$thresholdForReduceSetpoint), so wird wie folgt vorgegangen:

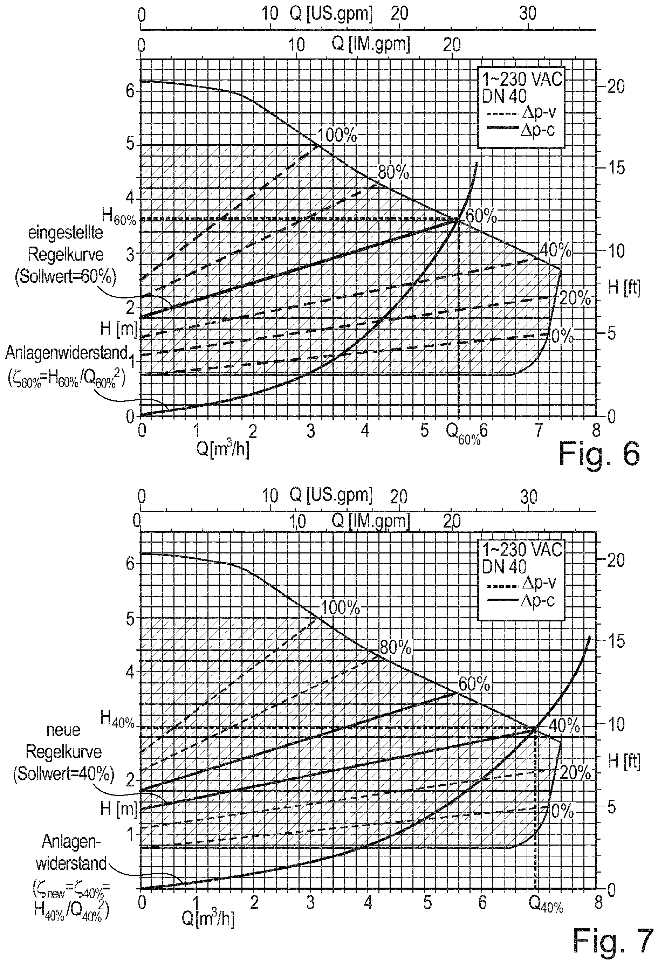

- Es wird die Differenz zwischen $\zeta_{minimum}$ und $\zeta_{default}$ ($\Delta\zeta = \zeta_{default} - \zeta_{minimum}$) bestimmt
- Es wird der Anlagenwiderstand $\zeta$ an dem höchsten Betriebspunkt bestimmt, der bei der eingestellten Regelkurve auftreten kann. Im Beispiel der Figur 6 ist die Regelkurve mit dem Sollwert 60% aktiviert. Der entsprechende Widerstandswert im höchsten Betriebspunkt wird mit $\zeta_{60\%}$ bezeichnet.
- Dieser Widerstandswert $\zeta_{60\%}$ wird nun um den Differenzbetrag $\Delta\zeta$ unter Berücksichtigung eines einstellbaren Faktors reduziert, insbesondere gemäß der nachfolgenden Gleichung:

$$\zeta_{new} = \zeta_{60\%} - \Delta\zeta / \text{newSetpointReduceFactor},$$

wobei der newSetpointReduceFactor ein einstellbarer Parameter, bspw. 2 sein kann.

- Im nächsten Schritt wird dann der passende Sollwert gesucht, der zu einer Regelkurve durch diesen neuen Schnittpunkt der Anlagenkennlinie $\zeta_{new}$ mit der Pumpenkennlinie 12 führt. Im Beispiel der Figur 7 ist dies die Regelkurve für den Sollwert 40%

- Diese Regelkurve mit dem Sollwert 40 % wird dann für die reguläre Proportionaldruckregelung der Pumpe aktiviert.

Tritt der Fall ein, dass der Sollwert erhöht werden soll ($\zeta_{minimum}/\zeta_{default}$>thresholdForIncreaseSetpoint), so wird wie folgt vorgegangen:

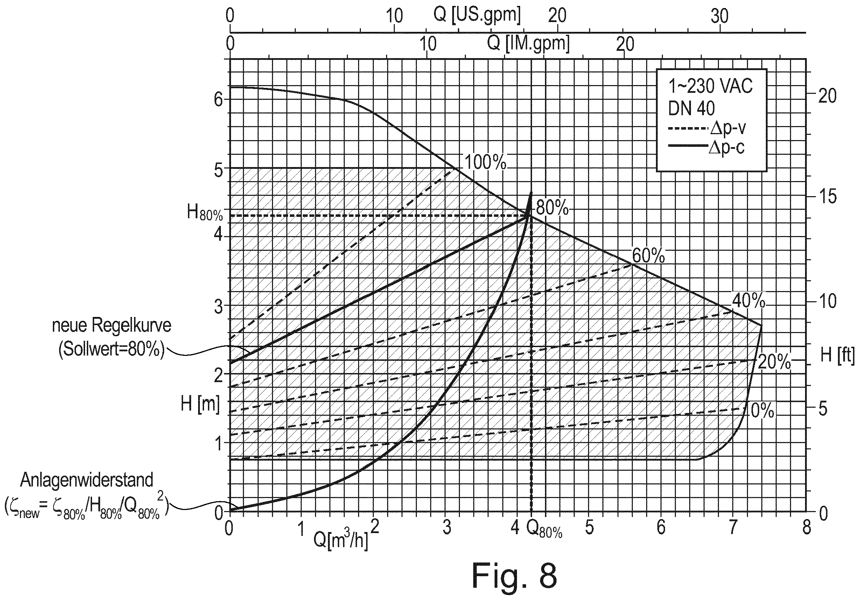

- Erhöhe den Widerstandswert $\zeta_{60\%}$ des aktuell vorliegenden Sollwerts (z.Bsp.: 60 %) um einen vorkonfigurierbaren festen Wert incereaseSetpoint
- Berechne den Wert $\zeta_{new} = \zeta_{60\%}$ + increaseSetpoint
- Finde den Schnittpunkt der durch $\zeta_{new}$ definierten Anlagenkennlinie mit der Pumpenkennlinie 12.
- Finde den Sollwert, der zu einer Regelkurve durch diesen Schnittpunkt führt (im Beispiel der Figur 8 ist dies die Regelkurve für den Sollwert 80 %)

Schritt 3: Wiederhole die Schritte 1 und 2. Es wird dann iterativ ein optimaler Sollwert gefunden.

Ergänzend soll das erfindungsgemäße Verfahren nochmals anhand einer durchgeführten Simulation verdeutlicht werden. Hierzu wurde das erfindungsgemäße Verfahren mittels Matlab/Simulink in eine vorhandene Gebäudesimulationsumgebung implementiert und getestet. In diesem Szenario benötigt das Gebäude einen Volumenstrom von 4,5 m$^3$/h, um die geforderte Raumtemperatur zu erreichen. Dieser Volumenstrom wird von den Thermostatventilen eingeregelt. Als Vereinfachung wird zunächst angenommen, dass es nur ein Thermostatventil gibt.

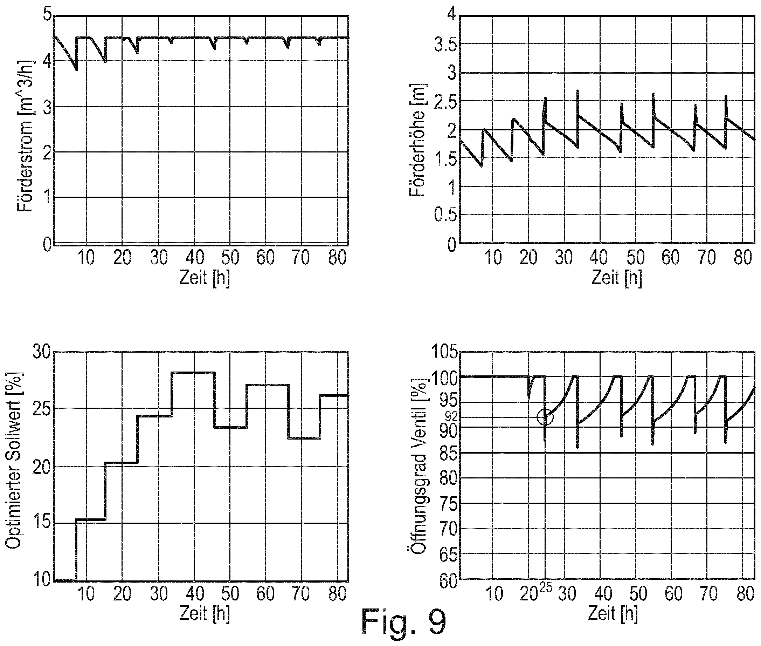

Die Pumpe wird zunächst auf einen Sollwert von 10 % eingestellt. Dies entspricht einer sehr kleinen Regelkurve. Figur 9 zeigt den Verlauf des Förderstroms Q (Figur 9a), die Förderhöhe H (Figur 9b), den durch das Verfahren optimierten Sollwert (Figur 9c) sowie den Ventilöffnungsgrad (Figur 9d: 0 % für geschlossen, 100 % für komplett geöffnet).

Man erkennt, dass zu Beginn der Simulation das Ventil vollständig geöffnet ist. Kurz nach Beginn der Simulation startet der Schritt 1 (*Dynamic Control*) und die Förderhöhe sinkt langsam ab. Da das Ventil bereits vollständig geöffnet ist, kann es den Förderstrom nicht mehr konstant halten. Der Förderstrom sinkt ebenfalls ab und es stellt sich eine Unterversorgung ein. Nach ca. 7 Stunden ist der erste *Dynamic Control* Zyklus abgeschlossen und es folgt der Schritt 2 (Finde neuen Sollwert). Die Pumpe erkennt, dass sofort eine Unterversorgung aufgetreten ist und somit der bisher gewählte Sollwert von 10 % zu klein war. Folglich wird jetzt ein höherer Sollwert von 16 % eingestellt. Dieser Sollwert führt zu den gleichen Ergebnissen wir der vorherige Sollwert von 10 %, sodass nach dem zweiten *Dynamic Control* Zyklus der Sollwert noch einmal angehoben wird auf 21 % und nach dem dritten Zyklus auf 24 %.

Durch das Anheben des Sollwertes auf 24 % reduziert sich der Öffnungsgrad des Ventils auf 92 % (siehe nach 25 Stunden). Dies bedeutet, ab hier liegt keine Unterversorgung mehr vor und das Ventil kann das Absenken der Förderhöhe durch Erhöhen des Öffnungsgrades kompensieren, sodass der Durchfluss konstant bleibt. Somit ist ein optimaler Sollwert gefunden. Durch die weiteren *Dynamic Control* Zyklen ändert sich der optimale Sollwert nicht mehr signifikant, sondern oszilliert um den optimalen Wert von ca. 24 % herum.

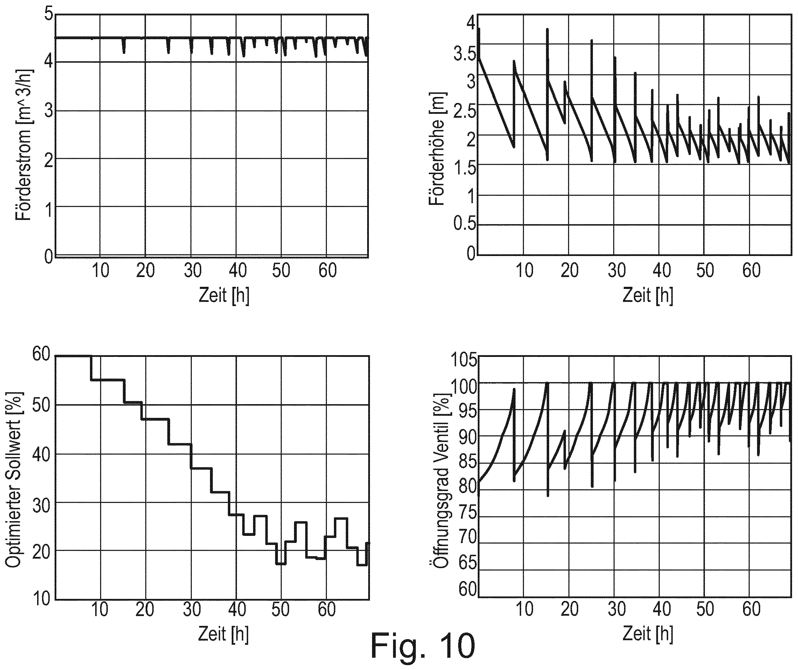

In Figur 10 sind entsprechende Diagrammdarstellungen eines weiteren Simulationsergebnisses gezeigt. Die Simulationsbedingung stimmen im Wesentlichen mit der Simulation der Figur 9 überein, einziger Unterschied ist der default gesetzte Sollwert, der in diesem Beispiel initial bei 60% lag.

Zu Beginn der Simulation hat das Ventil einen Öffnungsgrad von 82 %. Das bedeutet, der Sollwert von 60 % ist recht hoch gewählt. Die Pumpe startet mit Schritt 1 (*Dynamic Control*), indem sie die Förderhöhe absenkt. Das Ventil öffnet gleichzeitig und hält somit den Förderstrom konstant. Dabei erkennt die Pumpe, dass das Ventil noch im regelbaren Bereich ist und senkt im Schritt 2 den Sollwert auf 55 % ab. Dieses Absinken erfolgt zyklisch, bis die Pumpe wieder in den Bereich des optimalen Sollwertes von ca. 24 % kommt. Dann erkennt die Pumpe, dass das Ventil beinahe vollständig geöffnet ist und senkt den Sollwert nicht noch weiter ab.

Mit diesen Simulationen wurde gezeigt, dass die Pumpe immer den optimalen Sollwert findet, bei dem sie mit kleiner Leistungsaufnahme arbeitet und gleichzeitig die höchste Versorgungssicherheit garantiert.

**Patentansprüche**

1. Verfahren zur Regelung einer Umwälzpumpe mit variabler Drehzahl in einer hydraulischen Anlage, insbesondere in einer Heizungsanlage, wobei das Verfahren umfasst:

    i. Regelung der Drehzahl der Umwälzpumpe gemäß einer gespeicherten Regelkurve,

ii. Erkennen ob ein stationärer Betriebspunkt der hydraulischen Anlage vorliegt und Berechnung des initialen Anlagenwiderstandes,

iii. Sofern ein stationärer Betriebspunkt vorliegt, Absenken der Pumpendrehzahl bis zum Erreichen der minimalen Anlagenkurve und Berechnung des minimalen Anlagenwiderstandes,

iv. Anpassen der Regelkurve für die Drehzahlregelung der Umwälzpumpe auf Grundlage eines Vergleichs des bestimmten initialen und minimalen Anlagenwiderstandes.

2. Verfahren nach Anspruch 1, **dadurch gekennzeichnet, dass** ein stationärer Betriebspunkt erkannt wird, wenn der Förderstrom eine definierte Grenzabweichung nicht überschreitet, insbesondere der ermittelte Förderstrom für eine definierte Zeitdauer t innerhalb eines definierten Bereichs $\Delta Q$ des Förderstromes liegt, wobei der Bereich $\Delta Q$ der definierten Grenzabweichung entspricht.

3. Verfahren nach Anspruch 2, **dadurch gekennzeichnet, dass** die Drehzahl solange abgesenkt wird, bis der Förderstrom die definierte Grenzabweichung überschreitet bzw. außerhalb des Bereichs $\Delta Q$ liegt.

4. Verfahren nach einem der vorstehenden Ansprüche, **dadurch gekennzeichnet, dass** das Widerstandsverhältnis zwischen initialem und minimalem Anlagenwiderstand ermittelt wird und die Regelkurve abgesenkt wird, wenn das Widerstandsverhältnis kleiner als ein erster Grenzwert ist und die Regelkurve angehoben wird, wenn das Verhältnis größer als der erste Grenzwert oder größer als ein zweiter Grenzwert ist.

5. Verfahren nach Anspruch 4, **dadurch gekennzeichnet, dass** der erste Grenzwert zwischen 0,85 bis 0,95, insbesondere bei etwa 0,9 liegt und der zweite Grenzwert zwischen 0,95 bis 1 liegt, insbesondere bei etwa 0,98 liegt.

6. Verfahren nach Anspruch 4 oder 5, **dadurch gekennzeichnet, dass** die Regelkurve abhängig vom berechneten Differenzwert zwischen initialem und minimalem Anlagenwiderstand abgesenkt wird, insbesondere unter Berücksichtigung eines einstellbaren Faktors.

7. Verfahren nach Anspruch 6, **dadurch gekennzeichnet, dass** der Anlagenwiderstand für den höchsten, mittels der Regelkurve erreichbaren Betriebspunkt berechnet, um den berechneten Differenzwert, insbesondere unter Berücksichtigung des Faktors reduziert wird und die abgesenkte Regelkurve passend zum reduzierten Anlagenwiderstand bestimmt wird.

8. Verfahren nach einem der Ansprüche 4 bis 6, **dadurch gekennzeichnet, dass** zum Anheben der Regelkurve der Anlagenwiderstand für den höchsten, mittels der Regelkurve erreichbaren Betriebspunkt berechnet, dieser Anlagenwiderstand um einen definierbaren Betrag erhöht und die neue, angehobene Regelkurve passend zu diesem erhöhten Anlagenwiderstand berechnet wird.

9. Verfahren nach einem der Ansprüche 6 oder 7, **dadurch gekennzeichnet, dass** der Anlagenwiderstand für den höchsten, mittels der Regelkurve erreichbaren Betriebspunkt durch den Schnittpunkt der aktuellen Regelkurve mit der Pumpenkennlinie bestimmt ist.

10. Verfahren nach einem der vorstehenden Ansprüche, **dadurch gekennzeichnet, dass** das Verfahren iterativ ausgeführt wird, um die Regelkurve zu optimieren.

11. Verfahren nach einem der vorstehenden Ansprüche, **dadurch gekennzeichnet, dass** die Regelkurve eine Regelkurve zur Proportionaldruckregelung ist.

12. Umwälzpumpe, insbesondere Heizungsumwälzpumpe, mit einer Regelungseinheit, die konfiguriert ist, das Verfahren nach einem der vorstehenden Ansprüche auszuführen.

**Claims**

1. Method for controlling a variable revolution rate circulation pump in a hydraulic system, in particular in a heating system, wherein the method includes:

i. Controlling the revolution rate of the circulation pump according to a stored control curve,
ii. Detecting whether there is a stationary operating point of the hydraulic system and calculating the initial system resistance,

iii. If there is a stationary operating point, reducing the pump revolution rate until the minimum system curve is reached and calculating the minimum system resistance,

iv. Adjusting the control curve for the revolution rate control of the circulation pump on the basis of a comparison of the determined initial and minimum system resistances.

2. Method according to Claim 1, **characterized in that** a stationary operating point is detected if the delivery rate does not exceed a defined limit deviation, in particular the determined delivery rate for a defined period of time t is within a defined range $\Delta Q$ of the delivery rate, wherein the range $\Delta Q$ corresponds to the defined limit deviation.

3. Method according to Claim 2, **characterized in that** the revolution rate is reduced until the delivery rate exceeds the defined limit deviation or is outside the range $\Delta Q$.

4. Method according to any one of the preceding claims, **characterized in that** the resistance ratio between the initial and minimum system resistances is determined and the control curve is lowered if the resistance ratio is less than a first limit value and the control curve is raised if the ratio is greater than the first limit value or greater than a second limit value.

5. Method according to Claim 4, **characterized in that** the first limit value is between 0.85 and 0.95, in particular at about 0.9 and the second limit value is between 0.95 and 1, in particular at about 0.98.

6. Method according to Claim 4 or 5, **characterized in that** the control curve is lowered depending on the calculated difference value between the initial and minimum system resistances, in particular taking into account an adjustable factor.

7. Method according to Claim 6, **characterized in that** the system resistance is calculated for the highest operating point achievable by means of the control curve, is reduced by the calculated difference value, in particular taking into account the factor, and the lowered control curve is determined according to the reduced system resistance.

8. Method according to any one of Claims 4 to 6, **characterized in that** for raising the control curve the system resistance is calculated for the highest operating point achievable by means of the control curve, this system resistance is increased by a definable amount and the new, raised control curve is calculated according to this increased system resistance.

9. Method according to either one of Claims 6 or 7, **characterized in that** the system resistance for the highest operating point achievable by means of the control curve is determined by the intersection of the current control curve with the pump characteristic.

10. Method according to any one of the preceding claims, **characterized in that** the method is executed iteratively to optimize the control curve.

11. Method according to any one of the preceding claims, **characterized in that** the control curve is a control curve for proportional pressure control.

12. Circulation pump, in particular a heating circulation pump, with a control unit, which is configured to perform the method according to any one of the preceding claims.

**Revendications**

1. Procédé permettant de réguler une pompe de circulation avec un nombre de tours variable dans un système hydraulique, en particulier dans un système de chauffage, le procédé comprenant les étapes consistant à :

i. réguler le nombre de tours de la pompe de circulation selon une courbe de régulation mémorisée,

ii. identifier s'il existe un point de fonctionnement stationnaire du système hydraulique, et calculer la résistance initiale du système,

iii. dans la mesure où il existe un point de fonctionnement stationnaire, abaisser le nombre de tours de la pompe jusqu'à ce que la courbe minimale du système soit atteinte, et calculer la résistance minimale du système,

iv. adapter la courbe de régulation pour la régulation du nombre de tours de la pompe de circulation sur la base d'une comparaison des résistances initiale et minimale déterminées du système.

2. Procédé selon la revendication 1, **caractérisé en ce qu'**un point de fonctionnement stationnaire est identifié lorsque le débit de refoulement ne dépasse pas un écart limite défini, en particulier lorsque le débit de refoulement établi se trouve pendant une durée définie t à l'intérieur d'une plage définie ΔQ du débit de refoulement, la plage ΔQ correspondant à l'écart limite défini.

3. Procédé selon la revendication 2, **caractérisé en ce que** le nombre de tours est abaissé jusqu'à ce que le débit de refoulement dépasse l'écart limite défini ou se trouve à l'extérieur de la plage ΔQ.

4. Procédé selon l'une quelconque des revendications précédentes, **caractérisé en ce que** le rapport de résistance entre les résistances initiale et minimale du système est établi, et la courbe de régulation est abaissée si le rapport de résistance est inférieur à une première valeur limite, et la courbe de régulation est relevée si le rapport est supérieur à la première valeur limite ou supérieure à une deuxième valeur limite.

5. Procédé selon la revendication 4, **caractérisé en ce que** la première valeur limite est située entre 0,85 et 0,95, en particulier à environ 0,9, et la deuxième valeur limite est située entre 0,95 et 1, en particulier à 0,98.

6. Procédé selon la revendication 4 ou 5, **caractérisé en ce que** la courbe de régulation est abaissée en fonction de la valeur de différence calculée entre les résistances initiale et minimale du système, en particulier en tenant compte d'un facteur réglable.

7. Procédé selon la revendication 6, **caractérisé en ce que** la résistance du système est calculée pour le point de fonctionnement le plus élevé pouvant être atteint au moyen de la courbe de régulation, est réduite de la valeur de différence calculée, en particulier en tenant compte du facteur, et la courbe de régulation abaissée est déterminée conformément à la résistance réduite du système.

8. Procédé selon l'une quelconque des revendications 4 à 6, **caractérisé en ce que** pour le relèvement de la courbe de régulation, la résistance du système est calculée pour le point de fonctionnement le plus élevé pouvant être atteint au moyen de la courbe de régulation, cette résistance du système est augmentée d'un montant définissable, et la nouvelle courbe de régulation relevée est calculée conformément à cette résistance augmentée du système.

9. Procédé selon l'une quelconque des revendications 6 ou 7, **caractérisé en ce que** la résistance du système est déterminée pour le point de fonctionnement le plus élevé pouvant être atteint au moyen de la courbe de régulation par le point d'intersection de la courbe de régulation actuelle avec la courbe caractéristique de la pompe.

10. Procédé selon l'une quelconque des revendications précédentes, **caractérisé en ce que** le procédé est exécuté par itérations pour optimiser la courbe de régulation.

11. Procédé selon l'une quelconque des revendications précédentes, **caractérisé en ce que** la courbe de régulation est une courbe de régulation pour la régulation de pression proportionnelle.

12. Pompe de circulation, en particulier pompe de circulation de chauffage, comprenant une unité de régulation qui est configurée pour exécuter le procédé selon l'une quelconque des revendications précédentes.

Fig. 1

Fig. 2

Fig. 3

Fig. 4

a)

b)

c)

Fig. 5

Fig. 6

Fig. 7

Fig. 8

Fig. 9

16

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10163987 A1